# EUROPEAN PATENT SPECIFICATION

(11) **EP 2 958 043 B1**
(45) Date of publication and mention of the grant of the patent: **02.01.2019**
(21) Application number: 14382232.8
(22) Date of filing: 16.06.2014
(51) Int. Cl.: G06F 21/43, H04L 29/06, G06F 21/31, G06F 21/35, H04W 12/06

(54) **Method for the recognition of user profiles**
Verfahren zur Erkennung von Benutzerprofilen
Procédé de reconnaissance des profils d'utilisateur

(43) Date of publication of application: 23.12.2015
(73) Proprietor: Cashlog, S.L., 28002 Madrid (ES)
(72) Inventor: González Canabal, Diego, 28002 Madrid (ES); Misani, Fabio Stefano, 28002 Madrid (ES)
(74) Representative: Temiño Ceniceros, Ignacio

(56) References cited:
- WO-A2-2012/060878
- US-A1- 2007 174 904
- US-A1- 2012 124 651
- US-A1- 2013 185 192

## Description

### TECHNICAL FIELD OF THE INVENTION

The present invention relates to the field of recognizing user profiles. Particularly, there is described a solution for the recognition of a user profile by a first server on a network such as Local Area Networks (LAN), Metropolitan Area Networks (MAN), Wide Area Network (WAN), etc. The industrial application in which recognition can be applied to may be the authorization of a user profile, or the subscription to third parties services or telephone service providers, among others.

### BACKGROUND OF THE INVENTION

The recognition process is a process to identify the identity of a person or user in a system. Normally in this type of processes, the user has a personal and non-transferable password which is used for checking the authenticity of the user.

In mobile communications the recognition or authentication process is ensured by a protocol between a user device and the mobile telecommunication network, through codes stored in a subscriber identity module (SIM) in a mobile device. A Ki is a code of 128-bit value used for recognizing the SIMs on the mobile network. Each SIM holds a unique Ki assigned to it by an operator during the personalization process.

The SIM card is designed not to allow the Ki to be obtained using a smart-card interface. The smart-card interface is an interface between the SIM with the user device (UD) and can read said code. Therefore it is not allowed to obtain the Ki making use of the SIM; instead, the SIM card provides a function, Run GSM Algorithm, which allows the phone to send data to the SIM card, which will sign the data with the Ki. This, by design, makes usage of the SIM card mandatory unless the Ki can be extracted from the SIM card, or the carrier is willing to reveal the Ki.

When a user device starts up, it obtains a International Mobile Subscriber Identity (IMSI) from the SIM card, and sends the IMSI and his Ki to a Telecommunication Operator. The user device may have to pass a PIN to the SIM card before the SIM card will reveal this information. The telecommunication operator has associated the IMSI and the Ki in the Authentication Center (AuC), which is inside in Home Location Register (HLR). Therefore when the telecommunication operator receives the IMSI and the Ki from the user device, the telecommunication operator can complete the registration process of the user in the telecommunication network.

Due to this process all the communications between the user device and the mobile telephone network are ciphered and a user is recognized by the mobile network. In the case that a user accesses contents in the internet through the mobile telephone network and said contents involve any expenses, the telephone company can obtain some of these expenses through billing along with the communications services.

In the case that a user connects the internet through another network such as Wifi, Local Area Networks (LAN), Metropolitan Area Networks (MAN), Wide Area Network (WAN), etc., the user is not recognized by any mean on the Telecommunication Operator's Network which he belongs to. This is a handicap for the Telecommunication Operators to offer a mean to the user, to recognize or authenticate its identity in order to trace the usage of digital services from particular users.

Currently a company trying to offer digital product/services via Mobile Internet through the user's Telecommunication Operator Network, faces the problem of "how to identify or authenticate or recognize users browsing the Internet through a Wi-Fi interface". The only way to offer the Telecommunication Operator-Service recognition of a user is to request the user's MSISDN (or telephone number) he is associated to, by entering such information in a form. Subsequently, an SMS is usually sent to the user through the Telecommunication Operator Network with a PIN code.

Then, the user must enter such PIN code into another form, to be recognized, which may mean that the user receiving such PIN code is indeed the one holding the handset or mobile device and no other. Finally the user is recognized.

Patent application WO 2012/060878 A2 discloses a system and a method for charging the customer of a merchant, using his/her cellular device account. The system receives from a merchant an amount to be charged to a customer's cellular device account, the MSISDN and optionally the IMSI of the customer's cellular device. The cellular device may include a telephone or other type of device for which a monthly invoice is used to pay for service. If the IMSI is not received, it is obtained via a request to some or all of the cellular device service providers that operate in the country corresponding to the MSISDN received until one responds, thereby identifying both the IMSI of the customer and the customer's cellular device service provider.

Patent application US 2007/174904 A1 discloses a one-time password (OTP) service system and method for generating and authenticating an OTP using a mobile phone. The system includes an OTP server for generating a query for an authentication to transmit, receiving a response OTP password corresponding to the query, generating an OTP corresponding to the query, and performing an authentication when the OTP corresponds to with the response password. The system further includes a short message service SMS server for converting the query transmitted from the OTP server into a text message for transmission; an OTP mobile phone for detecting the query in the transmitted SMS message and generating and displaying the response password; a personal communications device which transmits the response password to the OTP server when the response password on the transmitted query from the OTP server is input; and a content offer server for providing a corresponding content to the personal communications device according to the results of the authentication.

Patent application US 2012/124651 A1 discloses a portable apparatus which is removably and communicatively connectable to a network device to communicate authentication or authorization credentials of a user in connection with the user logging into or entering into a transaction with a network site. The apparatus includes a communications port to connect and disconnect the apparatus to and from the network device and to establish a communication link with the network device when connected thereto. A processor receives a secure message from the network security server via the port. The message has a PIN code for authenticating the user to the network site, and is readable only by the apparatus. The processor either transfers, via the port, the received PIN to an application associated with the network site that is executing on the network device or causes the apparatus to display the received PIN for manual transfer to the application associated with the network site.

Patent application US 2013/185192 A1 refers to a computer-based method of managing electronic transactions. In said method, a plurality of consumer accounts are stored in a data store, each consumer account having a first MSISDN as a consumer account identifier. A plurality of merchant accounts are stored in the data store, each having a respective first merchant account identifier. Merchant offers are received and stored within the data store in association with the merchant accounts. A second MSISDN is identified from a charge request and is matched to the first MSISDN to identify respective consumer account. A second merchant account ID is received in the charge request and is matched to one of the first merchant account ID's to identify one of the merchant accounts. A merchant offer of the merchant account is then associated with the consumer account. The charge request also includes an amount that is processed against the selected consumer account.

The problem found in the state of the art is, thus, that the current methods for recognition are time consuming, and comprise a slow and low effective process of the identification of the user. Besides, it is not popular among users to insert a PIN code every time they request a service or product on the Internet. There is a need for a faster and easier authentication/recognition process for user profiles accessing through a network to a service provider, especially, when the users access to the service through networks in which the telecommunications operators are not involved, such as WiFi networks.

### SUMMARY OF THE INVENTION

The invention is defined by a method according to claim 1, a system according to claim 8 and a computer program according to claim 9. Further embodiments are defined by the dependent claims. All the features described in this specification (including the claims, description and drawings) and/or all the steps of the described method can be combined in any combination, with the exception of combinations of such mutually exclusive features and/or steps.

In particular, in a first aspect of the invention there is provided a method for recognizing a user profile associated to a subscriber identity module (SIM) by a first server located in a network, wherein the user profile operates on a user device and wherein the method comprises the steps of,
a) sending a first identifier by the user device, to the first server,
b) obtaining an identity of a second server, by the first server, associated to the first identifier,
c) requesting to the second server, by the first server, a second identifier associated to the user profile,
d) receiving the second identifier by the first server, e) recognizing, by the first server, the user profile associated to the second identifier.

A method according to the invention implies two servers and two identifiers. In a particular embodiment, the identifiers and the servers are:
- first identifier: an international mobile subscriber Identity or IMSI,
- second identifier: Mobile Subscriber Integrated services digital network-number or MSISDN or telephone number,
- first server: the entity in charge of providing the service to the user,
- second server: the telecommunications operator.

Advantageously this method overcomes the problem of avoiding asking the telephone number or MSISDN to the user to perform the recognition of the user. As it is known in the state of the art, the MSISDN is not a SIM data, so it cannot be retrieved by any entity which is external to the Telecommunication Operator. The SIM card comprises an IMSI that is sent to the Home Location Register or HLR in charge of doing the mapping MSISDN/IMSI. Therefore this method offers an efficient and user transparent way to mapping the IMSI-MSISDN to an external server located in a network; due to the fact that an HLR is located in the mobile telephone network, if the user is connected through an Ethernet interface or Wi-Fi interface to the first server (service provider), the HLR cannot provide such mapping and therefore the user may not be recognized or authenticated on the second server (telephone operator) when a user makes use of a service through the internet. Advantageously this method provides a reliable recognition of a user in a first server without the user's need to insert codes and telephone numbers, or receive PIN numbers therefore avoiding the user's intervention which is one of the main drawbacks of the methods in the state of the art. Due to the fact that this process is faster and more efficient, it is possible to reduce the traffic of the SMS and confirmation messages optimizing the resources of the network.

In an embodiment according to the first aspect of the invention there is provided a method, wherein the method further comprises,
- sending, by the first server, partially hidden the MSISDN to the user device,
- receiving by the user device, the MSISDN partially hidden from the first server, and
- sending, by the user device, a confirmation from the MSISDN partially hidden to the first server.

Advantageously this embodiment allows performing a confirmation step in the recognition process, and avoids a false recognition of the user in the case of there is an error in the look up table between the IMSI and the MSISDN stored the second server. Also this embodiment gives to the recognition process more openness, due to the fact that the user can see his MSISDN during the recognition process in his user device.

In an embodiment according to the first aspect of the invention there is provided a method, wherein the step e) further comprises,
i. generating, by the first server, a recognition message, preferably a One Time Password,
ii. sending, by the first server, the recognition message to the second server,
iii. sending, by the second server, the recognition message to the user device associated to second identifier (MSISDN),
iv. receiving, by the user device, the recognition message from the second server,
v. sending, by the user device, the recognition message to the first server,
vi. receiving, by the first server, the recognition message.

Advantageously this embodiment, further to solving the problem of avoiding asking the MSISDN to the user to perform the recognition of the user, offers a secure way to confirm the recognition of the user. This is due to the fact that in step iii, a recognition message, which ensures that the user is associated to the received IMSI, is sent to the user device with the MSIDN obtained allowing recognizing the authenticity of user. This advantageously prevents third parties to commit fraud by pretending to be the user profile from first server and second server perspectives. For example, a fraudulent entity may act as if it was a first server, and send a telephone number, or second identifier, to the second server making the second server interpret that a third user profile is the one accessing to an internet service provider, thus committing identity theft.

In an embodiment according to the first aspect of the invention there is provided a method wherein,
- in step ii, v and vi the recognition message is sent through a first network, preferably through an Ethernet interface and/or Wi-Fi interface connected to a network such as Internet and,
- in steps iii, iv, the recognition message is sent through a second network, preferably though a 2G, 3G, 4G radio access technology (RAT).

Advantageously this embodiment adds a security layer in the transmission of the recognition message between the first server, the second server and the user device. This is due to the fact that the communications between
- user device-first entity, and
- first entity-second entity
are performed in different type of networks than the communications between second server -user device. Therefore a third party, who wants to thief the user's profile, would be obliged to trace the traffic from two different networks with different interfaces and overcome the different security protocols of each network, thus having more difficulties than in the previous embodiment for performing identity theft.

In an embodiment according to the first aspect of the invention there is provided a method wherein sending a recognition message comprises sending a Short Message Service (SMS) message.

Advantageously sending the recognition message though a Short Message Service (SMS) message improves the security of the content and guarantees the reception of said message in a mobile environment. This may be named as a second or double recognition step.

In an embodiment according to the first aspect of the invention there is provided a method, wherein receiving by the user device (UD) the recognition message in the described second recognizing step further comprises intercepting and reading the SMS message received by the user device (UD). For example, if a service provider is accessed by a user through a mobile application, the mobile application running in a user device may intercept such SMS so that the user is not involved in said second recognizing step.

Advantageously this embodiment allows performing the method without the user's intervention, thus improving the popularity of the method for recognizing or authenticating a user, since no insertion of PIN code is required every time that a service provider recognizes the user.

In an embodiment according to the first aspect of the invention there is provided a method wherein the user device operates with more than one user profile associated to more than one subscriber identity module (SIM), wherein the step a) of sending a first identifier (IMSI) comprises sending a first identifier from one of said SIM's.

Advantageously this embodiment makes that the method according to the invention can be performed in user devices which comprise more than one SIM. The user would, in a case by case basis, select which SIM he may act with.

In an embodiment according to the first aspect of the invention the method further comprises a transaction of data between a user device (UD) and a second server after performing the step e.

Advantageously this method allows performing a transaction method through a recognition method according to the first aspect of the invention. Therefore the transaction process may comprise the following steps: Firstly the method according to the invention recognizes a user who wants to transfer the data. Once the user profile is recognized by the first server, the user may transfer data to the second server and the second server may transfer said data to the first server. This provides a high degree of security in the transaction between devices and minimizes the user intervention.

In a second aspect of the invention there is provided a user device program comprising computer program code, which, when executed by a user device, causes the user device to carry out the method steps according to the first aspect of the invention, when said steps are performed by a user device.

A user device program comprising computer program code, may be understood as the code for performing the method steps on a user device such as a mobile device, for example on a smartphone, table or computer. Therefore this would comprise the program code or mobile application code which may be stored in a computer readable medium, or a mobile device, or unloaded on a mobile phone, or tablet, or the like.

In a third aspect of the invention there is provided a user device comprising user device program code means adapted to carry out the method steps according to the first aspect of the invention, when said steps are performed by a user device.

In a fourth aspect of the invention there is provided a computer program comprising computer program code, which, when executed by a first server, causes the first server to carry out the method steps according to the first aspect of the invention, when said steps are performed by a first server.

A computer program comprising computer program code may be understood as the code for performing the method steps on a first server such as a service provider server. Therefore this would comprise the program code which may be stored in a computer readable medium, or a server.

In a fifth aspect of the invention there is provided a first server comprising computer program code means adapted to carry out the method steps according to the first aspect of the invention, when they are performed by the first server.

A first server adapted to carry out the method steps according to the first aspect of the invention may be understood as a server which comprises program code means adapted for implementing the method steps of a method according to the invention, when they are performed by a first server; this is, a server which may be a service provider intending to recognize a user profile by a method according to the invention and which comprise means specifically adapted for such implementation.

### DESCRIPTION OF THE DRAWINGS

These and other characteristics and advantages of the invention will become clearly understood in view of the detailed description of the invention which becomes apparent from preferred embodiments of the invention, given just as an example and not being limited thereto, with reference to the drawings.
- Figure 1: This figure represents the recognition process of a user profile according to the state of the art.
- Figure 2: This figure represents an embodiment of a network environment, where a method of the invention is employed.
- Figure 3: This figure represents an embodiment of a recognition process by a method according to the invention.
- Figure 4: This figure represents an embodiment of a recognition process by a method according to the invention, which sends a recognition message to user device to confirm its identity.
- Figure 5: This figure represents an embodiment wherein a method according to the present invention is implemented. The method is used to recognize a user profile associated to a user who buys a shirt from an online shop.

### DETAILED DESCRIPTION OF THE INVENTION

Once the object of the invention has been outlined, specific non-limitative embodiments are described hereinafter.

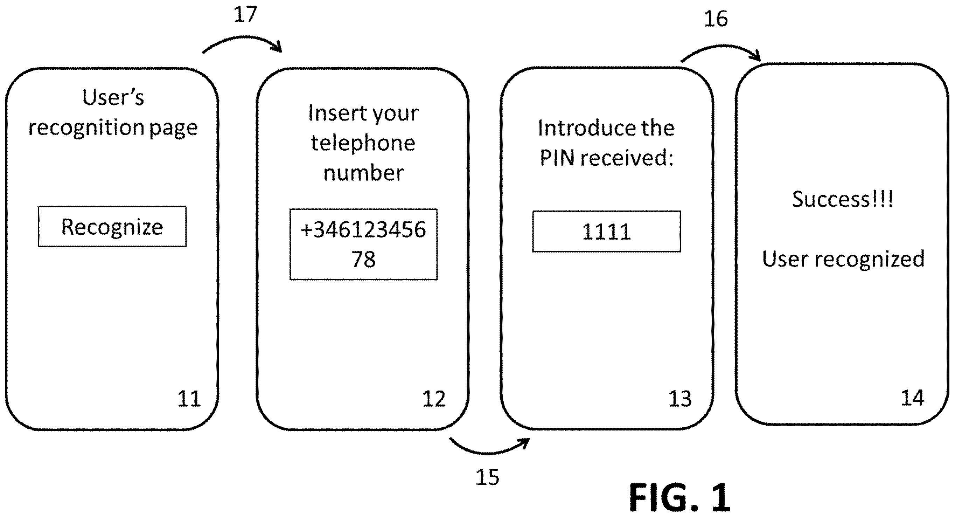

Currently, as it is shown in figure 1 where several screen shots of a possible mobile device are represented, a company offering digital product/services via Mobile Internet through the user's Telecommunication Operator Network faces the problem of "how to identify or authenticate or recognize users browsing the Internet through a Wi-Fi interface". The only way to offer the Telecommunication Operator-Service recognition (11) of a user is requesting (12) the user's MSISDN (or telephone number) he is associated to, by entering such information in a form. Subsequently, an SMS is usually sent (15) to the user through the Telecommunication Operator Network with a PIN code.

Then, the user must enter such PIN code into another form (13), to be recognized, which may mean that the user receiving such PIN code is indeed the one holding the handset or mobile device and no other. Finally the user is recognized (14) after sending the PIN (16) to the service provider.

There is a need for a faster and easier authentication/recognition process for user profiles accessing through a network to a service provider, especially, when the users access to the service through networks in which the telecommunications operators are not involved, such as WiFi networks.

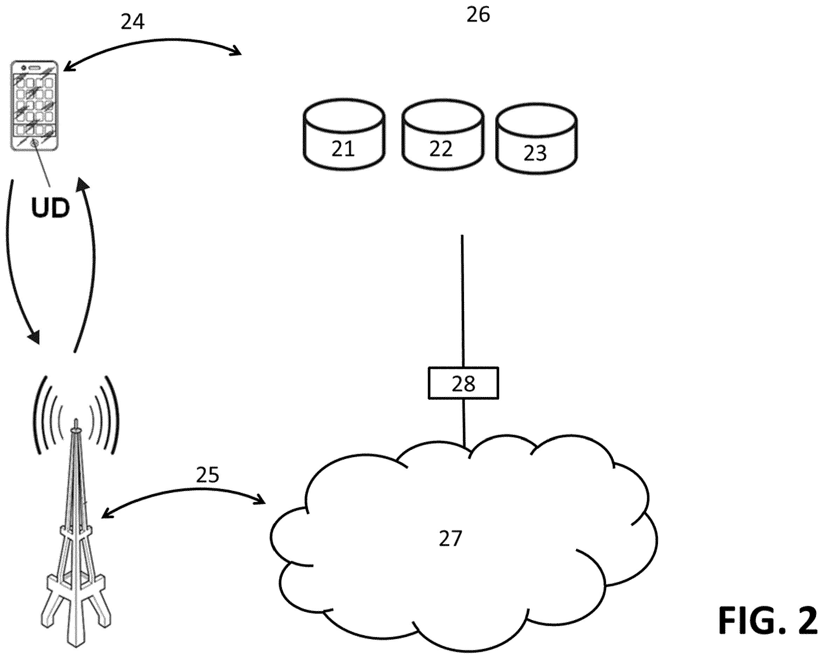

Figure 2 represents an embodiment of a network architecture for implementing the invention. In this embodiment, the network architecture comprises a user device (UD), which comprises a user profile associated to a subscriber identity module (SIM), associating a user with the user device (UD). The user device (UD) may connect to the network (26) in two ways:
- Directly (24) through an Ethernet interface and/or Wi-Fi interface connected to a first network (26) such as Local Area Networks (LAN), Metropolitan Area Networks (MAN), Wide Area Network (WAN), wherein a first server (21), a second server (22) and a third server (23) are located. In this case, the Telecommunication Operator is not able to recognize the user profile.
- Indirectly (25) through a second network (27), preferably a 2G, 3G, 4G RAT network. In this case, the recognition is performed by the Telecommunication Operator, due to the recognition performed in the SIM, as it is shown in the state of the art.

In the architecture of the first network (26) there is provided a first server (21) which works as service provider. This first server (21) associates a first identifier (IMSI) to each user profile, for example on a mapping table. When the user is connected directly (24) through an Ethernet interface, a method according to the invention is implemented minimizing the user intervention. Given the implementation of the method according to the invention the problem of identity theft is avoided; the IMSI identifier can be obtained by for example an application running on the user device (UD), so that it is sent to the first server (21), which subsequently requests the MSISDN to the second server (22).

The second server (22) may correspond to a telecommunication operator server (22). The telecommunication operator server (22) comprises all the user profiles in a telecommunication company registered, for example on a mapping table. The telecommunication operator sever (22) also comprises a database, which associates the first identifier (IMSI) and the second identifier (MSISDN) with a user and a user's bill for the communication services consumed in a time period.

A third server (23) or an application server is also comprised therein, which offers goods such as games, applications, clothes, etc. The users can connect to this server and acquire said goods.

The second network (27) corresponds to a 2G, 3G, and 4G RAT network or telecommunication network (27). In the figure a device such as, a Base Transceiver Station, Node B or eNodeB, is represented which facilitates radio access communication (25) between a user device (UD) and a telecommunication network (27). In the structure of the second network (27) the elements to recognize a user profile through a user device (UD) are provided, as it occurs in the state of the art. The first network (26) and the second network (27) are connected by a gateway (28), through which the exchange of information according to the invention may be implemented.

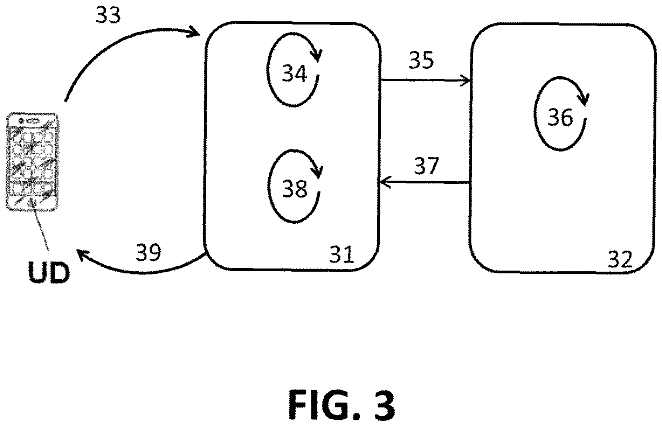

Figure 3 represents an embodiment of a user's recognition process in a first server (31), which may be known as service provider, implementing a method according to the present invention. Firstly, the user device (UD) sends (33) a recognition request, which includes the first identifier, directly through an Ethernet interface to a Wide Area Network (WAN). In this embodiment the first identifier is the IMSI which is allocated in the SIM and stored in the user device (UD) and which may be retrieved by an application running on the user device (UD) and offering an online shop.

Secondly, the service provider (31) retrieves (34) the identifier of the telecommunication operator server (32) from the IMSI received, because the IMSI number represents, in one of its ciphers, the telecommunication operator it is associated to.

Next, the service provider (31) requests (35) the MSISDN to the telecommunication operator server (32). In this step the telecommunication operator server (32) checks (36) in its database the MSISDN associated to that IMSI. The telecommunication operator server (32) may also identify that the first server (31) is a server which is actually authorized to request such information.

The service provider (31) receives (37) the MSISDN from the telecommunication operator server (32). In the case that there is not an MSISDN associated, the telecommunication operator server (32) may send an error message to the service provider (31).

Finally, the service provider (31) recognizes (38) the user profile associated to the MSISDN and the IMSI. In a final step the service provider (31) acknowledges (39) the recognition to the user device (UD).

In this embodiment all the communications between the user device (UD), the service provider (31) and the telecommunication operator server (32) are made through a secure protocol, preferably through HTTPS (Hypertext Transfer Protocol Secure).

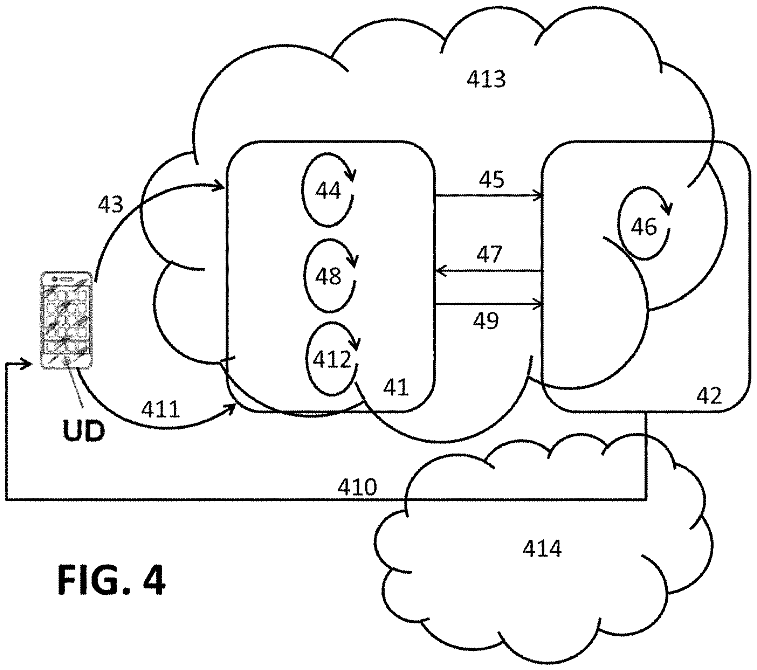

Figure 4 represents an embodiment of a user's recognition process by a first server (41) using the method of the present invention. In a first step, the user device (UD) sends (43) a recognition request including a first identifier through a first network (413) for example a Wi-Fi interface to a Metropolitan Area Networks (MAN). In this embodiment the first identifier is the IMSI which is comprised in the SIM stored in the user device (UD). The IMSI may be retrieved by an online shop application running on the used device (UD).

In a second step the first server (41) or service provider (41) retrieves (44) the identifier of the telecommunication operator server (42) from the IMS received.

In a third step the service provider (41) requests (45) an MSISDN to the telecommunication operator server (42). In this step the telecommunication operator server (42) checks (46) in its database the MSISDN associated to that IMSI.

In a fourth step the service provider (41) receives (47) the MSISDN from the telecommunication operator server (42).

In a fifth step the service provider (41) generates (48) a recognition message, preferably a One Time Password (OTP). Subsequently, the service provider (41) sends (49) the OTP to the telecommunication operator server (42) through the first network (413).

In a sixth step the telecommunication operator server (42) sends (410) the OTP to the user device (UD) through a second network (414) preferably through a 2G or 3G, or 4G RAT network. Then, the user device (UD) sends (411) the OTP received to the service provider (41) through the first network (413). Finally, the service provider (41) checks (412) that the OTP sent and the OTP received are the same. In this case, the account sever (41) recognizes the user. If both messages are different, the first server (41) sends an error message to the user device (UD).

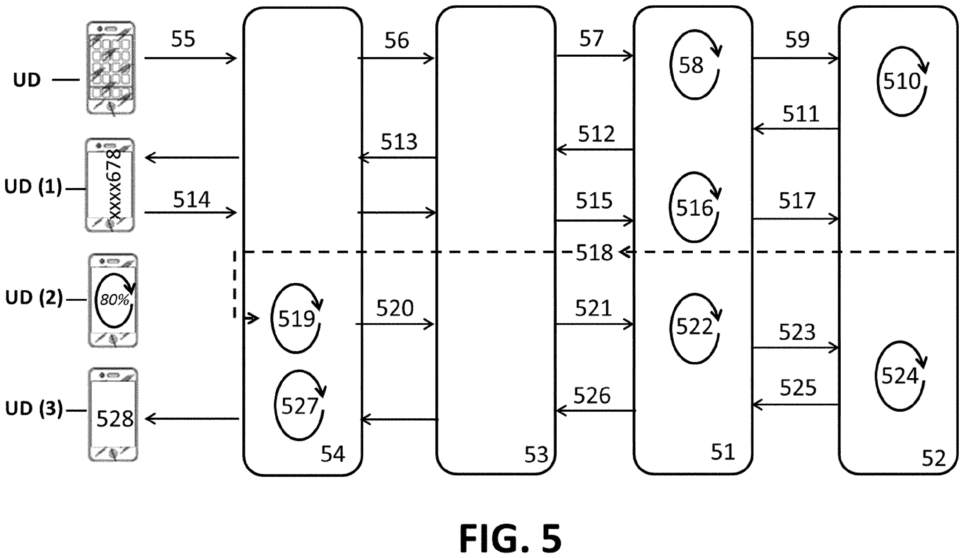

Figure 5 represents an embodiment of a method according to the present invention. In this embodiment it is shown a shirt shopping process a by a user profile through a user device (UD) such as a smartphone, in which a mobile application (54) is running. This mobile application (54) is an online-shop application wherein clothes are shown and can be purchased from a shop server (53). The mobile application (54) connects to the shop server (53) in this embodiment via Wi-Fi. The shop server (53) provides the application with clothes prices, offers and ways of payment. In this embodiment, the way of payment is through a payment server (51), which charges the user's telecommunication operator's bill with an extra charge corresponding to the purchase performed via the mobile application. For said charge to be applied to a particular user profile in said bill, the payment server (51) requires to know said user profile, which is hidden since the connection is performed through Wi-Fi. Therefore, the payment server (51) connects to a telecommunication operator server (52), which manages the user profiles' bills and authorizes the charges, only if the payment server (51) recognizes the user.

Figure 5 also represents the different screen-shot status of the user device (UD), being:
- UD (1) represents a confirmation page of purchase,
- UD (2) represents a buying process screen, and
- UD (3) represents "a thank you screen" of the purchase realized.

As it is shown in the state of the art users devices browsing the internet using a Wi-Fi network are not identified by any mean on the telecommunication operator network which they belong. This is a handicap for the telecommunication operators to offer a mean to the user, to pay digital goods through them.

The method described in this embodiment allows companies to offer a way to identify univocally the user device's MSISDN and enables digital-good purchases through Mobile phone payment, through the telecommunication operator's billing network. The steps represented in figure 5 describe the shopping process using a method according to the invention:
1) The user may start-up the mobile application (54) and selects (55) a product he wants to purchase. The mobile application sends (56) in a shopping request the product selected and the IMSI associated to a SIM in the user device (UD) to the shop server (53). It can be a subscription service or one off purchase.
2) The shop server (53) connects (57) through a secure HTTP connection with payment server (51). The payment server (51) receives the IMSI of the user profile who wants to buy the product and obtains (58) the telecommunication operator which the bill will be charged from.
3) The payment server (51) connects (59) to the telecommunication operator server (52) and requests MSISDN associated to the IMSI received.
4) The telecommunication operator server (52) identifies (510) the IMSI and returns (511) to the payment server (51) the MSISDN associated, through a secure HTTP connection.
5) The payment server (51) provides (512) the MSISDN, partially hidden, to the shop server (53), and subsequently the shop server (53) provides (513) the partially hidden MSISDN to the mobile application (54). The partially hidden MSISDN may be show in the confirmation page UD (1), in the form of xxxx678.
   The MSISDN is partially hidden to ensure that the application server (53) is not able to complete the purchase without completing the recognition via the method according to the invention. In this case, the confirmation page may show a message such as "are you sure you would like to complete te purchase of a shirt?" and the telephone number partially hidden for the user's confirmation.
6) The user confirms (514) the purchase by clicking on a confirmation button. The confirmation is forwarded to the shop server (53). During the execution of this step the mobile application (54) may show a progress bar, as it is shown in UD (2).
7) The shop server (53) sends (515) a purchase confirmation to payment server (51) through a secure HTTP connection. During the execution of this step the mobile application (54) may show a progress bar, as it is shown in UD (2).
8) The payment server (51) generates (516) a One Time Password (OTP) which it is sent (517) towards the telecommunication operator server (52). Subsequently, the OTP is sent (518) via an SMS MT to the user device (UD) by the telecommunication operator server (52). A telecommunication operator network delivers (518) the SMS to the user device (UD). During the execution of this step the mobile application (54) may show a progress bar, as it is shown in UD (2).
9) The mobile application (54) further comprises a module (519) to intercept and read the SMS received with the OTP. Therefore the mobile application (54) intercepts the OTP received in the user device (UD) and sends (520) to the shop server (53) for the recognition, without an intervention of the user. This is advantageous with respect to the state of the art, because a user is not required to insert any telephone number, and neither to check an OTP number and insert it back into the application thus decreasing popularity. During the execution of this step the mobile application (54) may show a progress bar, as it is shown in UD (2).
10) The shop server (53) sends (521) through a secure HTTP connection the OTP to the payment server (51) which enables the payment server (51) to recognize (522) the user profile or to verify that the user profile is the one actually purchasing the shirt. During the execution of this step the mobile application (54) may show a progress bar, as it is shown in UD (2).
11) If the OTP is valid, the payment server (51) sends (523) a billing request to the telecommunication operator server (52). Otherwise an authentication error is sent to the shop server (53) and then to the user. During the execution of this step the mobile application (54) may show a progress bar, as it is shown in UD (2).
12) The telecommunication operator server (52):
   - charges (524) the service on the user's bill and
   - sends (525) the result of this action to payment server (51) form.

   During the execution of this step the mobile application (54) may show a progress bar, as it is shown in UD (2).
13) The payment server (51) sends (526) the result to the shop server (53) which, in turn, forwards the result to the mobile application (54). During the execution of this step the mobile application (54) may show a progress bar, as it is shown in UD (2).
14) Finally the result of the purchase is shown (527) in a "thank you page (528)" as it is represented in UD (3) and the user can access to the product purchased.

In an embodiment a transfer process is done after the recognition process. Firstly the user is recognized as it is represented in figure 3, figure 4, or figure 5. Once the user is recognized by the first server (51), the user transfers the order of payment to the telecommunication operator, which makes a transaction of money to the payment server (51). The payment server (51) pays to the application server (53) and the money is transferred to the application server, which sells the shirt to the user.

In other embodiments, the purchase may be made on a videogame, or a service, or the like.

## Claims

1. A method for validating, by a first server (21, 31, 41, 51), a Mobile Subscriber Integrated Services Digital Network, MSISDN, number associated to a subscriber identity module, SIM, wherein the first server (21, 31, 41, 51) is located in a network (26), wherein the first server (21, 31, 41, 51) is a payment server, and wherein the method comprises the steps of:
a) sending (33,43), by a user device, an International Mobile Subscriber Identity, IMSI, to the first server (21, 31, 41, 51), through a third server (53), wherein the third server (53) is a shop server;
b) obtaining (34,44, 58), by the first server (21, 31, 41, 51), an identity of a second server (22, 32, 42, 52), associated to the IMSI, wherein the second server (22, 32, 42, 52) is a telecommunication operator server;
c) requesting (35, 45, 59) to the second server (22, 32, 42, 52), by the first server (21, 31, 41, 51), the MSISDN number associated to the IMSI;
d) receiving (37, 47, 511), by the first server (21, 31, 41, 51), the MSISDN number from the second server (22, 32, 42, 52);
e) sending, by the first server (21, 31, 41, 51), and through the third server (53), the MSISDN number partially hidden to the user device;
f) receiving, by the user device, the partially hidden MSISDN number from the first server (21, 31, 41, 51) through the third server (53), and
g)sending, by the user device, a validation response which confirms the partially hidden MSISDN number to the first server (21, 31,41, 51) through the third server (53).

2. A method according to the preceding claim, further comprising:
i. generating (48, 516), by the first server (21, 31, 41, 51), a recognition message, preferably a One Time Password OTP,
ii. sending (49, 517), by the first server (21, 31, 41, 51), the recognition message to the second server (22, 32, 42, 52),
iii. sending (410, 518), by the second server (22, 32, 42, 52), the recognition message to the user device associated to the MSISDN,
iv. receiving, by the user device, the recognition message from the second server (22, 32,42, 52),
v. sending (411), by the user device, the recognition message to the first server (21, 31, 41, 51),
vi. receiving (521), by the first server (21, 31, 41, 51), the recognition message.

3. A method according to claim 2, wherein
- in steps ii, v, and vi, the recognition message is sent through a first network (26), preferably through an Ethernet interface and/or Wi-Fi interface connected to a network such as Internet and,
- in steps iii, iv, the recognition message is sent through a second network (27), preferably through a 2G, 3G, 4G RAT.

4. A method according to claim 3, wherein sending a recognition message comprises sending a SMS message.

5. A method according to claim 4, wherein receiving by the user device the recognition message further comprises intercepting and reading the SMS message received by the user device.

6. A method according to any of the previous claims, wherein
- a user profile is further associated to more than one subscriber identity module, SIM, in a user device, and
- in the step a) of sending (33,43) a first identifier, IMSI, comprises sending a first identifier from one of said SIM's.

7. A method according to any of the previous claims, further comprising a transaction of data between a user device and a second server (22, 32, 42, 52) after performing step d).

8. A system comprising: a user device, a first server (21, 31, 41, 51), a second server (22, 32, 42, 52) and a third server (53); wherein said system is adapted to perform the steps of the method of any one of claims 1 to 7.

9. A computer program comprising computer program code which, when executed by a system according to claim 8, causes the system to perform the steps of the method of any one of claims 1 to 7.

## Patentansprüche

1. Verfahren zur Validierung, mittels eines ersten Servers (21, 31, 41, 51), einer dienstintegrierten digitalen Netzwerk für Mobilteilnehmer, MSISDN,-Nummer, welche mit einem Teilnehmer-Identifikationsmodul, SIM, assoziiert ist, wobei sich der erste Server (21, 31, 41, 51) in einem Netzwerk (26) befindet, wobei der erste Server (21, 31, 41, 51) ein Zahlungsserver ist, und wobei das Verfahren folgende Schritte umfasst:
a) das Senden (33, 43), mittels eines Benutzergeräts, einer Internationalen Mobilfunk-Teilnehmererkennung, IMSI, zum ersten Server (21, 31, 41, 51), über einen dritten Server (53), wobei der dritte Server (53) ein Geschäftsserver ist;
b) das Erhalten (34, 44, 58), mittels des ersten Servers (21, 31, 41, 51), einer Identität eines zweiten Servers (22, 32, 42, 52), welche mit der IMSI assoziiert ist, wobei der zweite Server (22, 32, 42, 52) ein Telekommunikationsbetreiberserver ist;
c) das Abfragen (35, 45, 59) beim zweiten Server (22, 32, 42, 52), mittels des ersten Servers (21, 31, 41, 51), der mit der IMSI assoziierten MSISDN-Nummer;
d) das Empfangen (37, 47, 511), mittels des ersten Servers (21, 31, 41, 51), der MSISDN-Nummer aus dem zweiten Server (22, 32, 42, 52);
e) das Senden, mittels des ersten Servers (21, 31, 41, 51), und über den dritten Server (53), der MSISDN-Nummer, teilweise verborgen, zum Benutzergerät;
f) das Empfangen, mittels des Benutzergeräts, der teilweise verborgenen MSISDN-Nummer aus dem ersten Server (21, 31, 41, 51) über den dritten Server (53), und
g) das Senden, mittels des Benutzergeräts, einer Validierungsantwort, welche die teilweise verborgene MSISDN-Nummer zum ersten Server (21, 31, 41, 51) über den dritten Server (53) bestätigt.

2. Verfahren nach dem vorhergehenden Anspruch, zusätzlich umfassend:
i. das Erzeugen (48, 516), mittels des ersten Servers (21, 31, 41, 51), einer Erkennungsnachricht, vorzugsweise eines Einmalpassworts, OTP,
ii. das Senden (49, 517), mittels des ersten Servers (21, 31, 41, 51), der Erkennungsnachricht zum zweiten Server (22, 32, 42, 52),
iii. das Senden (410, 518), mittels des zweiten Servers (22, 32, 42, 52), der Erkennungsnachricht zum mit dem MSISDN assoziierten Benutzergerät,
iv. das Empfangen, mittels des Benutzergeräts, der Erkennungsnachricht aus dem zweiten Server (22, 32, 42, 52),
v. das Senden (411), mittels des Benutzergeräts, der Erkennungsnachricht zum ersten Server (21, 31, 41, 51),
vi. das Empfangen (521), mittels des ersten Servers (21, 31, 41, 51), der Erkennungsnachricht.

3. Verfahren nach Anspruch 2, wobei
- in den Schritten ii, v und vi, die Erkennungsnachricht über ein erstes Netzwerk (26), vorzugsweise über eine Ethernet-Schnittstelle und/oder eine WLAN-Schnittstelle, welche mit einem Netzwerk, wie Internet, verbunden ist, gesendet wird und,
- in den Schritten iii, iv, die Erkennungsnachricht über ein zweites Netzwerk (27), vorzugsweise über eine 2G, 3G, 4G RAT, gesendet wird.

4. Verfahren nach Anspruch 3, wobei das Senden einer Erkennungsnachricht das Senden einer SMS-Nachricht umfasst.

5. Verfahren nach Anspruch 4, wobei das Empfangen mittels des Benutzergeräts der Erkennungsnachricht zusätzlich das Abfangen und das Lesen der vom Benutzergerät empfangenen SMS-Nachricht umfasst.

6. Verfahren nach einem der vorhergehenden Ansprüche, wobei
- ein Benutzerprofil zusätzlich mit mehr als einem Teilnehmer-Identifikationsmodul, SIM, in einem Benutzergerät assoziiert ist, und
- Schritt a) des Sendens (33, 43) eines ersten Identifikators, IMSI, das Senden eines ersten Identifikators aus einem der genannten SIM's umfasst.

7. Verfahren nach einem der vorhergehenden Ansprüche, zusätzlich umfassend eine Datentransaktion zwischen einem Benutzergerät und einem zweiten Server (22, 32, 42, 52) nach der Durchführung des Schritts d).

8. System umfassend: ein Benutzergerät, einen ersten Server (21, 31, 41, 51), einen zweiten Server (22, 32, 42, 52) und einen dritten Server (53); wobei das genannte System dazu angepasst ist, die Schritte des Verfahrens nach einem der Ansprüche 1 bis 7 durchzuführen.

9. Computerprogramm umfassend einen Computerprogrammcode, welches, wenn es durch ein System nach Anspruch 8 ausgeführt wird, hervorruft, dass das System die Schritte des Verfahrens nach einem der Ansprüche 1 bis 7 durchführt.

## Revendications

1. Procédé de validation, par un premier serveur (21, 31, 41, 51), d'un numéro de réseau numérique à intégration de services (RNIS) de l'abonné mobile associé à un module d'identité d'abonné, SIM, dans lequel le premier serveur (21, 31, 41, 51) est situé dans un réseau (26), dans lequel le premier serveur (21, 31, 41, 51) est un serveur de paiement, et dans lequel le procédé comprend les étape de :
a) l'envoi (33, 43) par un dispositif utilisateur, d'une identité internationale d'abonnement mobile, IMSI, au premier serveur (21, 31, 41, 51), à travers un troisième serveur (53), dans lequel le troisième serveur (53) est un serveur de boutique ;
b) l'obtention (34, 44, 58), par le premier serveur (21, 31, 41, 51), d'une identité d'un second serveur (22, 32, 42, 52), associé à l'IMSI, dans laquelle le second serveur (22, 32, 42, 52) est un serveur d'opérateur de télécommunication ;
c) la demande (35, 45, 59) au second serveur (22, 32, 42, 52), par le premier serveur (21, 31, 41, 51), du numéro RNIS associé à l'IMSI ;
d) la réception (37, 47, 511), par le premier serveur (21, 31, 41, 51), du numéro RNIS à partir du second serveur (22, 32, 42, 52) ;
e) l'envoi, par le premier serveur (21, 31, 41, 51) et à travers le troisième serveur (53), du numéro RNIS partiellement caché au dispositif utilisateur ;
f) la réception, par le dispositif utilisateur, du numéro RNIS partiellement caché à partir du premier serveur (21, 31, 41, 51) à travers le troisième serveur (53), et
g) l'envoi, par le dispositif utilisateur, d'une réponse de validation qui confirme le numéro RNIS partiellement caché au premier serveur (21, 31, 41, 51) à travers le troisième serveur (53).

2. Procédé selon la revendication précédente, comprenant en outre :
i. la génération (48, 516) par le premier serveur (21, 31, 41, 51), d'un message de reconnaissance, de préférence un mot de passe à usage unique OTP,
ii. l'envoi (49, 517), par le premier serveur (21, 31, 41, 51), du message de reconnaissance au second serveur (22, 32, 42, 52),
iii. l'envoi (410, 518), par le second serveur (22, 32, 42, 52), du message de reconnaissance au dispositif utilisateur associé au numéro RNIS,
iv. la réception, par le dispositif utilisateur, du message de reconnaissance à partir du second serveur (22, 32, 42, 52),
v. l'envoi (411), par le dispositif utilisateur, du message de reconnaissance au premier serveur (21, 31, 41, 51),
vi. la réception (521), par le premier serveur (21, 31, 41, 51), du message de reconnaissance.

3. Procédé selon la revendication 2, dans lequel
- dans l'étape ii, v, et vi, le message de reconnaissance est envoyé à travers un premier réseau (26), de préférence à travers une interface Ethernet et/ou une interface Wifi reliée à un réseau tel qu'Internet et,
- dans l'étape iii, iv, le message de reconnaissance est envoyé à travers un second réseau (27), de préférence à travers 2G, 3G, 4G RAT.

4. Procédé selon la revendication 3, dans lequel l'envoi d'un message de reconnaissance comprend l'envoi d'un message SMS.

5. Procédé selon la revendication 4, dans lequel la réception par le dispositif utilisateur du message de reconnaissance comprend en outre l'interception et la lecture du message SMS reçu par le dispositif utilisateur.

6. Procédé selon l'une quelconque des revendications précédentes, dans lequel
- un profil utilisateur est associé en outre à plus d'un module d'identité d'abonné, SIM, dans un dispositif utilisateur, et
- dans l'étape a) d'envoi (33, 43) un premier identifiant, IMSI, comprend l'envoi d'un premier identifiant à partir dudit SIM.

7. Procédé selon l'une quelconque des revendications précédentes, comprenant en outre une transaction de données entre un dispositif utilisateur et un second serveur (22, 32, 42, 52) après la mise en oeuvre de l'étape d).

8. Système comprenant : un dispositif utilisateur, un premier serveur (21, 31, 41, 51), un second serveur (22, 32, 42, 52) et un troisième serveur (53) ; dans lequel ledit système est adapté à la mise en oeuvre des étapes du procédé de l'une quelconque des revendications 1 à 7.

9. Programme informatique comprenant un code de programme informatique qui, lorsqu'il est exécuté par un système selon la revendication 8, mène le système à mettre en oeuvre les étapes du procédé de l'une quelconque des revendications 1 à 7.
